# EUROPEAN PATENT APPLICATION

(11) **EP 4 603 258 A1**
(43) Date of publication of application: **20.08.2025**
(21) Application number: 25157488.5
(22) Date of filing: 12.02.2025
(51) Int. Cl.: B29C 64/124, B29C 64/188, B29C 64/214, B29C 64/236, B33Y 10/00, B33Y 30/00

(54) **STEREOLITHOGRAPHY MULTI-BLADE RECOATING SYSTEM**

(30) Priority: 13.02.2024 US 202463552935 P
(71) Applicant: 3D Systems, Incorporated, Rock Hill, SC 29730 (US)
(72) Inventor: Dunne, Patrick, Lafayette, CA, 94549 (US); Kuester, Evan, Del Mar, CA, 92014 (US); Innes, Eric M., San Diego, CA, 92122 (US)
(74) Representative: dompatent von Kreisler Selting Werner - Partnerschaft von Patent- und Rechtsanwälten mbB

(57) **Abstract**

A three-dimensional (3D) printing system configured to manufacture a three-dimensional (3D) article includes a vessel configured to contain a photocurable resin, a build plate coupled to the vertical movement mechanism, an imaging subsystem configured to selectively image over a build plane that is above the build plate, a coating subsystem including a plurality (N) of coater blades coupled to a horizontal movement mechanism, the N coater blades defining lateral regions therebetween, and a controller. The controller is configured to operate the vertical movement mechanism to position an upper surface of the build plate or the 3D article one layer thickness below the build plane, operate the horizontal movement mechanism to translate the N coater blades over the build plane and to provide a new layer of resin over the upper surface, and operate the imaging subsystem to selectively irradiate the new layer of resin in the lateral regions.

## Description

### Field of the Invention

### Cross-Reference to Related Applications

This non-provisional patent application claims priority to U.S. Provisional Application Serial Number 63/552,935, Entitled "Three-Dimensional Printing System with Resin Vessel Positioning System" by Patrick Dunne et al., filed on February 13, 2024, incorporated herein by reference under the benefit of U.S.C. 119(e).

The present disclosure concerns an apparatus and method for the digital fabrication of three-dimensional (3D) articles by a layer-by-layer selective radiative curing of a photocurable build material. More particularly, the present disclosure concerns a way of reducing a total fabrication time.

### Background

3D printing systems are in wide use for prototyping and manufacturing articles. One type of 3D printing system utilizes a process called stereolithography. A typical stereolithography system utilizes a resin vessel, an imaging system, and a build plate within liquid photocurable resin held by the resin vessel. An article is manufactured in a layer-by-layer manner by selectively imaging and radiatively curing layers of the photocurable resin over the build plate. There is an ongoing desire to improve productivity of 3D printing systems.

### Summary

A first aspect of the disclosure is a three-dimensional (3D) printing system configured to manufacture a three-dimensional (3D) article. The 3D printing system includes a vessel configured to contain a photocurable resin, a build plate coupled to the vertical movement mechanism, an imaging subsystem configured to selectively image over a build plane that is above the build plate, a coating subsystem including a plurality (N) of coater blades coupled to a horizontal movement mechanism, the plurality of coater blades defining lateral regions therebetween, and a controller. The controller is configured to operate the vertical movement mechanism to position an upper surface of the build plate or the 3D article one layer thickness below the build plane, operate the horizontal movement mechanism to translate the N coater blades over the build plane and to provide a new layer of resin over the upper surface, and operate the imaging subsystem to selectively irradiate the new layer of resin in the lateral regions.

In one implementation, the N coater blades are coupled to a support that moves with the N coater blades in unison during translation. The support can include two end portions that are spaced apart along a lateral X-axis (X), the translation is along a lateral Y-axis (Y) that is orthogonal to X. The N coater blades can extend along X between the two end portions. Motion of the support can be constrained by a linear bearing or by two linear bearings.

In another implementation, the controller is configured to operate the imaging subsystem concurrently with operating the horizontal movement mechanism.

In yet another implementation, the N coater blades extend along an oblique angle relative to X and Y. The horizontal movement mechanism can be configured to move the N coater blades along Y during a coating operation.

In a further embodiment, the N coater blades extend radially outward from a vertical axle. The build plane can have a lateral shape of a whole or partial circle.

### Brief Description of the Figures

FIG. 1 is a schematic illustration of an embodiment of a three-dimensional (3D) printing system for manufacturing or fabricating a 3D article.
FIG. 2 is an isometric drawing that illustrates certain components of a three-dimensional (3D) printing system for manufacturing or fabricating a 3D article.
FIG. 3 is an isometric drawing of a coating subsystem in isolation.
FIG. 4 is an isometric cutaway view of a single coater blade in isolation.
FIG. 5 is a schematic plan view of a multi-blade embodiment of a coater module positioned over a build plane.
FIG. 6 is a flowchart depicting a method of manufacturing a 3D article.
FIG. 7A is a schematic plan view of a multi-blade coater module beginning to translate over a build plane.
FIG. 7B is a schematic plan view of a multi-blade coater module at the end of a translation over a build plane.

### Detailed Description of the Preferred Embodiments

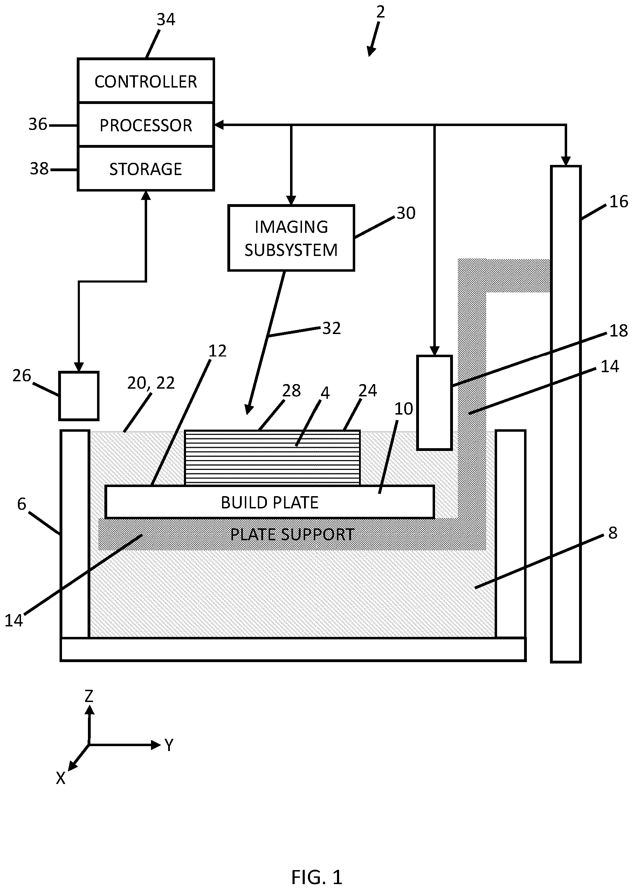

FIG. 1 is a schematic illustration of an embodiment of a three-dimensional (3D) printing system 2 for manufacturing or fabricating a 3D article 4. In describing system 2, mutually orthogonal axes X, Y, and Z will be utilized and otherwise referred to as an X-axis, a Y-axis, and a Z-axis. Axes X and Y are lateral axes that are generally horizontal. The Z-axis is a vertical axis that is generally aligned with a gravitational reference. The term "generally" implies that a direction or magnitude is not necessarily exact but is by design. Thus the term "generally horizontal" means horizontal (perpendicular to a gravitational vector) to within design and manufacturing tolerances. The term "generally aligned" means aligned to within design and manufacturing tolerances.

3D printing system 2 includes a resin vessel 6 for containing a photocurable resin 8. In the illustrated embodiment, photocurable resin 8 includes, inter alia, a monomer, a catalyst, and a filler. The catalyst allows the resin 8 to be hardened and cured with an application of radiation such as blue radiation, violet radiation, or ultraviolet radiation that would typically have a wavelength of less than about 450 nm (nanometers). Photocurable resins for stereolithography systems are known in the art.

System 2 includes a build plate 10 with an upper surface 12 upon which the 3D article 4 is formed. A build plate support structure 14 supports build plate 10. A vertical movement mechanism 16 is operable to vertically position the build plate support structure 14 and in doing so vertically position the build plate 10. In one embodiment, the vertical movement mechanism 16 includes a fixed motor coupled to a lead screw. The build plate support structure 14 includes a threaded bearing that receives the lead screw. As the motor turns the lead screw, the effect is to controllably translate the build plate support structure 14 up or down. In addition, the vertical movement mechanism 16 and the build plate support structure 14 include mutually engaging linear bearings that assure linear motion of the build plate support structure 14 along the vertical axis Z. Various vertical and lateral movement mechanisms are known in the field of stereolithography. All typically include linear bearings for guiding motion but the movement can be based upon a lead screw, a rack and pinion system, a belt and pulley system, or other well-known means of imparting motion.

System 2 includes a resin level subsystem 18 configured to maintain a resin upper surface 20 at a predetermined vertical position. In the illustrated embodiment, the resin upper surface 20 is generally coincident with a build plane 22. The resin level subsystem 18 can include a resin level sensor and a weight coupled to a pully system. The weight is partially immersed in the resin 8 such that raising and lowering the weight alters a vertical position of the resin upper surface 20 via volumetric displacement. The resin level sensor outputs a signal indicative of a vertical position of the resin upper surface 20. The signal is analyzed and the pully system is operated to raise and lower the weight to maintain the resin upper surface 20 to be generally coincident with the build plane 22.

An "upper surface" 24 can be defined which is either the upper surface 12 or an upper surface 24 of the 3D article 4 when it is partially formed. Before forming an additional material layer onto the 3D article 4, the upper surface 24 is positioned at a vertical position that is generally one material layer thickness below the build plane 22.

System 2 includes a coating subsystem 26. After upper surface 24 is positioned one layer thickness below build plane 22, the coating subsystem 26 is configured to pass over the upper surface and to define a new layer 28 of the resin 8 over the upper surface 24. Details of the coating subsystem 26 will be discussed infra. The new layer 28 of resin 8 has the resin upper surface 20 that is generally coincident with build plane 22.

System 2 includes an imaging subsystem 30. Imaging subsystem 30 is configured to scan an energy beam 32 over the build plane 22 to selectively cure and harden the new layer 28 of resin 8 and to form a new material layer of the 3D article 4. In an illustrative embodiment, imaging subsystem 30 includes a laser that generates a radiation beam 32 that is reflected by a scanner. The scanner scans the radiation beam 32 over the build plane 22. In an illustrative embodiment, the scanner includes two galvanometer mirrors including an X-mirror and a Y-mirror configured to scan the radiation beam along the X-axis and the Y-axis respectively over the build plane 22. Imaging subsystems are known in the field of stereolithography.

In another embodiment, imaging subsystem 30 includes a light source, a reflective micromirror array, and projection optics. The light source illuminates the micromirror array. Individual mirrors in the micromirror array have two states including an ON state and an OFF state. In the ON state, a mirror reflects a pixel of light through the projection optics and to the build plane 22. In the OFF state, the mirror reflects a pixel of light to a light trap that absorbs the light. In this way, the imaging subsystem 30 selectively illuminates an array of pixels over the build plane 22. Such imaging subsystems are known as "DLP systems" or digital light processing subsystems and are known in the art of stereolithography.

Whether the imaging system 30 uses a scanning laser or pixel array, the light for selective curing is selected from a wavelength that is in the blue to ultraviolet range or from about 100 to 500 nanometers. The photocurable resin 8 catalyst is sensitive to the selected wavelength.

A controller 34 is coupled to the vertical movement mechanism 16, the resin level subsystem 18, the coating subsystem 26, the imaging subsystem 30, and other portions of system 2. The controller 34 includes a processor 36 (such as a CPU or central processing unit) coupled to a non-transient information storage device 38 (such as flash memory). Storage device 38 stores software instructions. Controller 34 is configured to operate the portions of system 2 as the processor 36 executes the software instructions stored on the non-transient information storage device 38. Controller 34 can includes a single unit that is associated with system 2 or it can include a plurality of control units that can be co-located with and or remotely located relative to the illustrated system 2.

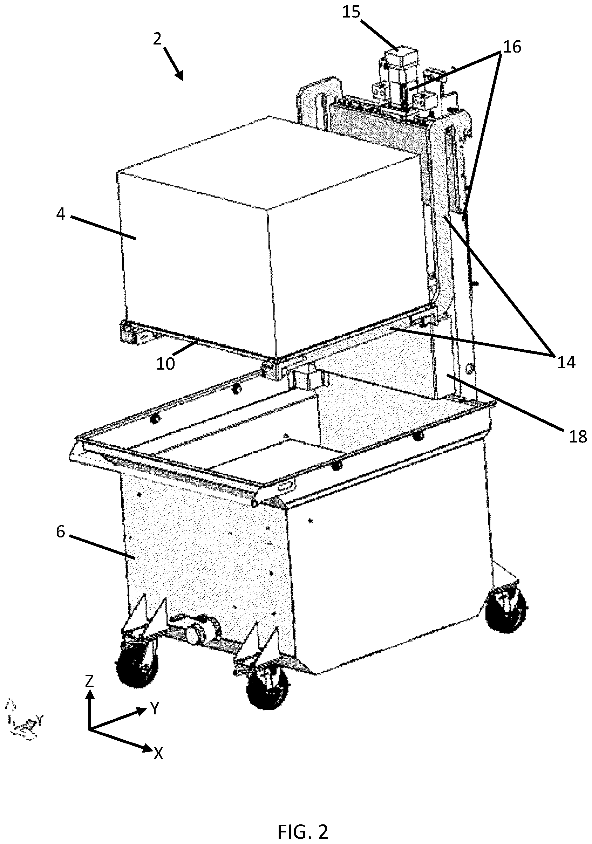

FIG. 2 is an isometric drawing that illustrates certain components of an embodiment of system 2. In the illustrated embodiment from a user point of view the axes X, Y, and Z can be described. The lateral X-axis extends from left to right. The lateral Y-axis extends from front to back or from front to rear. The vertical Z-axis extends upward. The illustrated components include the resin vessel 6, build plate 10, build plate support structure 14, vertical movement mechanism 16, and resin level subsystem 18 (including the weight that is raised and lowered). The vertical movement mechanism 16 includes a motor 15 coupled to a vertical lead screw for providing vertical positioning of the build plate support structure 14 and the build plate 10. Between the build plate support structure 14 and the vertical movement mechanism 16 are a pair of linear bearings (hidden in this figure) to control linearity of motion along the Z-axis. Not illustrated is the coating subsystem 26 and imaging subsystem 30.

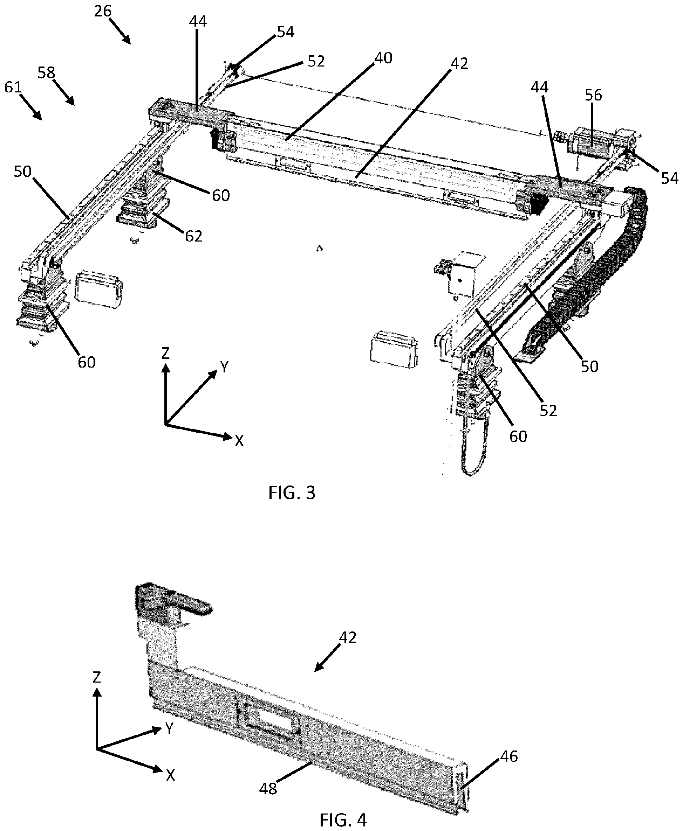

FIG. 3 is an isometric drawing of an embodiment of a coating subsystem 26 in isolation. Coating subsystem 26 includes a wiper module 40 or coater module 40 which includes a coater blade 42 that is supported between two end portions 44 which are at opposed ends of the coater blade 42 with respect to the lateral X-axis. While FIG. 3 illustrates a wiper module 40 with a single coater blade 42, it is to be understood that an illustrative embodiment to be disclosed infra includes a plurality of coater blades 42 mounted to a wiper module or support 40.

FIG. 4 is an isometric cutaway view of a single coater blade 42 in isolation. One end of the cutaway view illustrates an internal recess 46 that is at least partially filled with resin 8 to facilitate coating irregular upper surfaces 24 of 3D articles 4. Coater blade 42 also has a lower edge 48.

Referring back to FIG. 3, coating subsystem 26 includes a pair of linear bearings 50 at opposed ends of the coater module 40 with respect to the X-axis. The end portions 44 are in sliding engagement with and supported by the linear bearings 50. The end portions 44 slide upon the linear bearings 50 along the Y-axis.

Two belts 52 are individually supported by pulleys 54 at opposed ends of the coater module 40. The belts 52 are attached to the end portions 44 at the opposed ends of the coater module 40. A motor 56 is coupled to two of the pulleys 54. Rotation of the pulleys 54 by motor 56 causes movement of the belt and translation of the coater module 40 along the Y-axis in sliding engagement and support by the linear bearings 50. The combination of the motor 56, pulleys 54, belts 52, and other possible components can be referred to as a "lateral movement mechanism" 58 for transporting coater module 40 along the Y-axis.

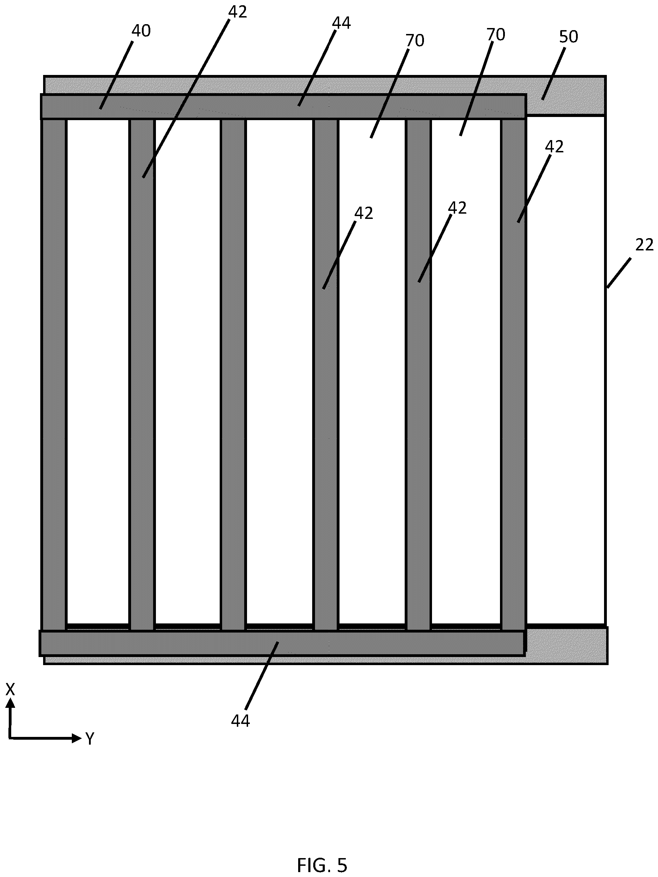

A set of four vertical actuators 60 support and vertically position the linear bearings 50. The vertical actuators 60 are individually coupled between a vertical support 62 (FIG. 5) and one of the linear bearings 50. The linear bearings 50 individually are supported by a front vertical actuator 60 and a rear vertical actuator 60 which enables a height and angular tilt of each linear bearing 50 to be adjusted. In one embodiment, the vertical actuators 60 individually include a motorized lead screw that turns and thereby raises or lowers a nut that is attached to one end portion of one of the linear bearings 50. The set of four vertical actuators 60 and other associated components can be referred to as a "vertical actuator system" 61.

In the discussion that follows, it is to be understood that the coater module 40 can include end portions 44 that extend along Y and support a plurality of coater blades 42 that extend along X and are arranged along Y. FIG. 5 is a schematic plan view depicting a multi-blade embodiment of the coater module 40 positioned over build plane 22. Coater module 40 includes two end portions 44 coupled by the plurality of coater blades 42. The end portions 44 are individually coupled to linear bearings 50. It is to be understood that the embodiment of FIG. 5 can be similar in certain respects to the embodiment of FIGS. 3 and 4 except for including a plurality of coater blades 42.

Coater blades 42 can be modified relative to the coater blade 42 illustrated in FIG. 4. For example, one coater blade can have a hollow circular cross-section with an internal recess 46 having a generally circular cross-section. Other generally rectangular, triangular, and variable shaped embodiments are possible.

The coater module 40 defines lateral regions 70 between pairs of coater blades 42. In the illustrated embodiment, the lateral regions 70 are generally rectangular in shape and allow radiation from the imaging subsystem 30 to reach the build plane 22 between the coater blades 42. The coater module 40 including the end portions 44 and coater blades 42 is configured to move as one unit along Y. Thus, during a fabrication or manufacturing process, the plurality of coater blades 42 move in unison.

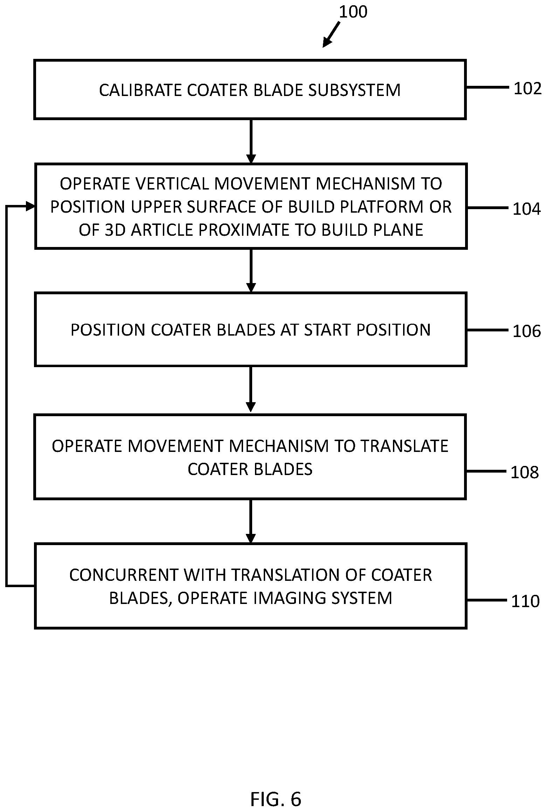

FIG. 6 is a flowchart depicting a method 100 of manufacturing a 3D article using the embodiment of FIG. 5. Generally speaking, method 100 is performed by controller 34 as the processor 36 executes software instructions stored on non-transient or non-volatile information storage 38.

According to 102, the coating subsystem 26 is calibrated. This can include leveling and height calibration of the lower edges 48 of the coater blades 42 relative to the build plane 22. According to 104, the vertical movement mechanism 16 is operated to position the upper surface of build platform 10 or later the 3D article 4 one layer thickness below the build plane 22.

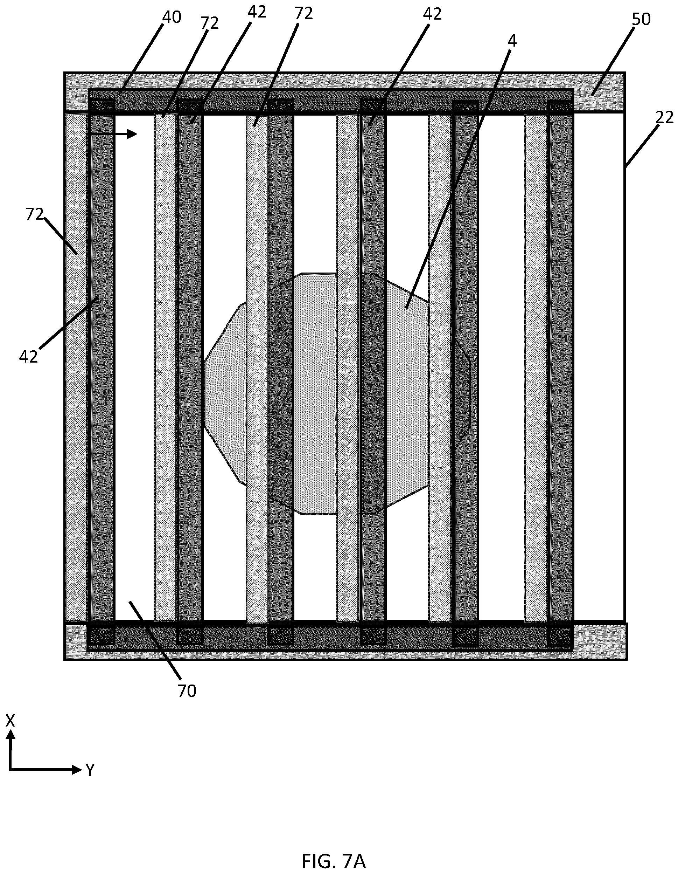

According to 106, the plurality of coater blades 42 are positioned at a start position as illustrated in FIG. 5. According to 108, the lateral movement mechanism 58 is operated to begin translating or scanning the coater module 40 along Y as illustrated in FIG. 7A. As scanning occurs, a plurality of leveled wakes 72 are formed behind the coating blades 42 and within the lateral regions 70.

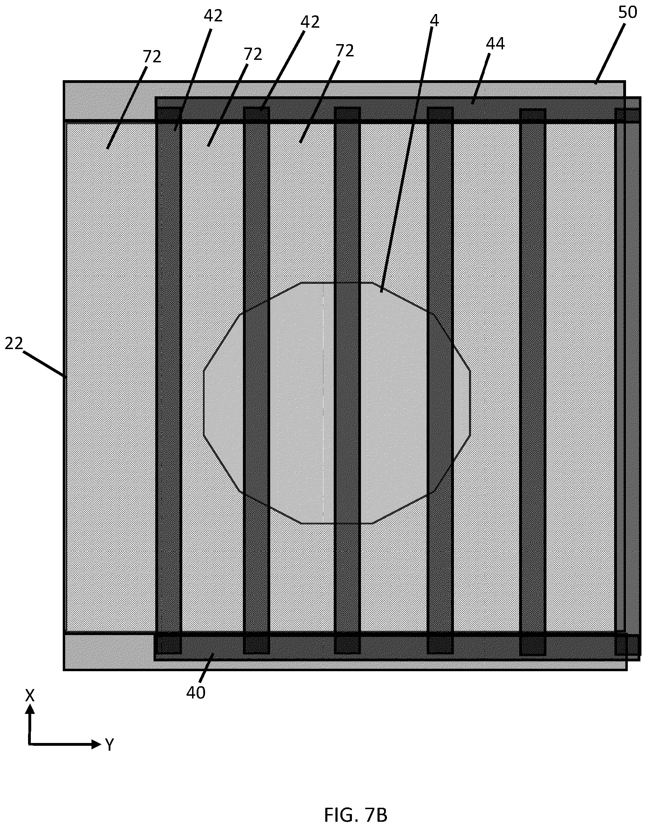

According to 110 - concurrent with translation of the coater blades 42, the imaging subsystem 30 selectively irradiates the build plane 22 within the leveled wakes 72. FIG. 7B illustrates the state at which the coating blades 42 are fully translated along Y. During this translation, the imaging subsystem 30 has fully imaged the build plane 22. Steps 104-110 can be repeated until the 3D article 4 is fully fabricated.

The coater module 40 is described as including coater blades 42 extending along X and translating along Y. In a first alternative embodiment, the coater blades 42 can extend along an axis that is oblique relative to X and Y (but still lateral or horizontal). Various geometries of the coater blades 42 are possible such as arcuate, zig-zag, or irregular as desired.

In a second alternative embodiment, the coater blades 42 extend radially from a vertical axle parallel to Z. The coater blades 42 are angularly rotated about the vertical axis. The build plane 22 can have a circular geometry with the vertical axis at the center. The circular geometry can be a full circle or a partial circle such as a half circle, quarter circle, or some fraction of a circle.

The specific embodiments and applications thereof described above are for illustrative purposes only and do not preclude modifications and variations encompassed by the scope of the following claims.

## Claims

1. A three-dimensional (3D) printing system configured to manufacture a three-dimensional (3D) article comprising:
a vessel configured to contain a photocurable resin;
a build plate coupled to the vertical movement mechanism;
an imaging subsystem configured to selectively image over a build plane that is above the build plate;
a coating subsystem including a plurality (N) of coater blades coupled to a horizontal movement mechanism, the N coater blades defining lateral regions therebetween;
a controller configured to operate the imaging subsystem and the coating subsystem to form a plurality of layers to fabricate the 3D article, for individual layers the controller is configured to:
operate the vertical movement mechanism to position an upper surface of the build plate or the 3D article one layer thickness below the build plane;
operate the horizontal movement mechanism to translate the N coater blades over the build plane and to provide a new layer of resin over the upper surface; and
operate the imaging subsystem to selectively irradiate the new layer of resin in leveled wakes within the lateral regions.

2. The 3D printing system of claim 1 wherein the N coater blades are coupled to a support that moves with the N coater blades in unison during translation.

3. The 3D printing system of claim 2 wherein the support includes two end portions that are spaced apart along a lateral X-axis (X), the translation is along a lateral Y-axis (Y) that is orthogonal to X.

4. The 3D printing system of claim 3 wherein the N coater blades extend along X between the two end portions.

5. The 3D printing system of claim 2 wherein motion of the support is constrained by a linear bearing.

6. The 3D printing system of claim 2 wherein motion of the support is constrained by two linear bearings.

7. The 3D printing system of claim 1 wherein the controller is configured to operate the imaging subsystem concurrently with operating the horizontal movement mechanism.

8. The 3D printing system of claim 1 wherein the N coater blades extend along an oblique angle relative to X and Y.

9. The 3D printing system of claim 1 wherein the N coater blades extend radially outward from a vertical axle.

10. The 3D printing system of claim 9 wherein the build plane has a lateral shape of a whole or partial circle.

11. A method of manufacturing a 3D article using a three dimensional printing system including a vessel configured to contain a photocurable resin, a build plate coupled to the vertical movement mechanism, an imaging subsystem configured to selectively image over a build plane that is above the build plate, and a coating subsystem including a plurality (N) of coater blades coupled to a horizontal movement mechanism, the N coater blades defining lateral regions therebetween, the method including:
operating the vertical movement mechanism to position an upper surface of the build plate or the 3D article one layer thickness below the build plane;
operating the horizontal movement mechanism to translate the N coater blades over the build plane and to provide a new layer of resin over the upper surface; and
operating the imaging subsystem to selectively irradiate the new layer of resin in leveled wakes within the lateral regions.

12. The method of claim 11 wherein the N coater blades are coupled to a support that moves with the N coater blades in unison during translation.

13. The method of claim 12 wherein the support includes two end portions that are spaced apart along a lateral X-axis (X), the translation is along a lateral Y-axis (Y) that is orthogonal to X.

14. The method of claim 13 wherein the N coater blades extend along X between the two end portions.

15. The method of claim 12 wherein the support is constrained by a linear bearing.

16. The method of claim 12 wherein the support is constrained by two linear bearings.

17. The method of claim 11 wherein the controller is configured to operate the imaging subsystem concurrently with operating the horizontal movement mechanism.

18. The method of claim 11 wherein the N coater blades extend along an oblique angle relative to X and Y.

19. The method of claim 11 wherein the N coater blades extend outward from a vertical axle.

20. The method of claim 19 the build plane has a lateral shape of a whole or partial circle.
